# EUROPEAN PATENT APPLICATION

(11) **EP 4 670 826 A1**
(43) Date of publication of application: **31.12.2025**
(21) Application number: 24760259.2
(22) Date of filing: 16.02.2024
(51) Int. Cl.: B01D 63/02, F16J 15/10, F24F 6/00, H01M 8/04119

(54) **HOLLOW FIBER MEMBRANE MODULE**

(30) Priority: 21.02.2023 JP 2023025249
(71) Applicant: NOK Corporation, Minato-ku, Tokyo 105-8585 (JP)
(72) Inventor: ITO, Yosuke, Kikugawa-shi, Shizuoka 437-1507 (JP)
(74) Representative: Global IP Europe Patentanwaltskanzlei
(86) International application number: PCT/JP2024/005461
(87) International publication number: WO 2024/176959

(57) **Abstract**

A hollow fiber membrane module capable of reducing the manufacturing cost is provided. A case 100 has a first pipe 111 and a second pipe 112. In the case 100, a holding member 210 that holds a plurality of hollow fiber membranes 220 is provided. The holding member 210 includes a first plate-shaped portion 211 and a second plate-shaped portion 212 provided to sandwich the plurality of hollow fiber membranes 220 and a connection portion 215 connecting the plate-shaped portions. A passage passing from the first pipe 111 to the first plate-shaped portion 211 is formed between the first plate-shaped portion 211 and the case 100, and a passage passing from the second pipe 112 to the second plate-shaped portion 212 is formed between the second plate-shaped portion 212 and the case 100.

## Description

### [Technical Field]

The present invention relates to a hollow fiber membrane module.

### [Background Art]

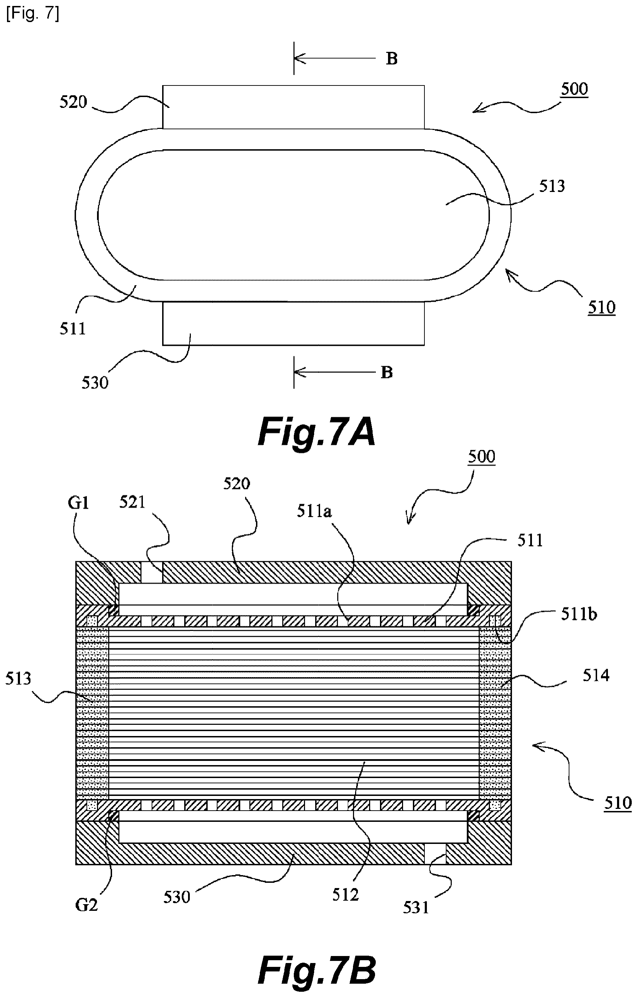

In a humidifier that is used in a fuel cell for a car, a hollow fiber membrane module is provided. In such a device, there is an increasing demand for a high-output system, and the hollow fiber membrane module tends to become larger. A hollow fiber membrane module according to a related art will be described with reference to Fig. 7. Fig. 7 is a schematic view illustrating a configuration of the hollow fiber membrane module according to the related art. Fig. 7A is a front view of the hollow fiber membrane module and Fig. 7B is a cross-sectional view along BB in Fig. 7A.

A hollow fiber membrane module 500 according to the related art includes a hollow fiber membrane module main body 510 and a pair of cover members 520 and 530 that are mounted on the hollow fiber membrane module main body 510. The hollow fiber membrane module main body 510 includes a case 511 and a plurality of hollow fiber membranes 512 that are accommodated in the case 511. The case 511 has an accommodation interior that is open at both ends thereof, and the plurality of hollow fiber membranes 512 are accommodated in this accommodation interior. In the pair of cover members 520 and 530, openings 521 and 531 that serve as an inlet and an outlet for a fluid are provided, respectively. In addition, a plurality of through holes 511a for making the inner spaces of the cover members 520 and 530 communicate with the accommodation interior of the case 511 are provided in the case 511.

The hollow fiber membrane module main body 510 is provided with a pair of sealing and fixing portions 513 and 514 that seal gaps among the plurality of hollow fiber membranes 512 in a state where the hollow interior of each of the plurality of hollow fiber membranes 512 is open are provided on one end side and the other end side of the case 511. An annular gap between the inner circumferential surface of the case 511 and the pair of sealing and fixing portions 513 and 514 is sealed with a liquid-form gasket.

In the hollow fiber membrane module 500 configured as described above, for example, a wet gas is made to flow from the opening 521 to the opening 531 so as to pass through the exteriors of the plurality of hollow fiber membranes 512, and a dry gas is made to flow from the sealing and fixing portion 514 side to the sealing and fixing portion 513 side so as to pass through each of the hollow interiors of the plurality of hollow fiber membranes 512, whereby the dry gas is humidified, and the wet gas is dehumidified.

Since passages for a fluid (the wet gas in the above-described example) are secured by the inner spaces of the cover members 520 and 530, the fluid is allowed to flow throughout the entire accommodation interior of the case 511.

In such a configuration, the fluid is to be prevented from leaking outside from the spaces between the case 511 and the cover members 520 and 530. Therefore, gaskets G1 and G2 that seal the gaps between the case 511 and the cover member 520 and the gaps between the case 511 and the cover member 530 are provided, respectively. Here, the case 511 and the cover members 520 and 530 are resin molded products. If the hollow fiber membrane module 500 is large, the case 511 and the cover members 520 and 530 are large too. Therefore, in order to obtain desired sealing performance, a cutting process or the like is to be performed after molding in order to enhance the flatness of portions with which the gaskets G1 and G2 are close contact in the case 511 and the cover members 520 and 530. This makes it difficult to reduce the manufacturing cost.

### [Citation List]

### [Patent Literature]

[PTL 1]
Japanese Patent Application Publication No. 2015-181986

### [Summary of Invention]

### [Technical Problem]

The present invention provides a hollow fiber membrane module capable of reducing the manufacturing cost.

### [Solution to Problem]

The present invention adopted the following means to solve the above-described problem.

The present invention is a hollow fiber membrane module including:
a plurality of hollow fiber membranes;
a case, in an accommodation interior of which the plurality of hollow fiber membranes are accommodated, the accommodation interior being open at both ends, and
a pair of sealing and fixing portions that seal gaps among the plurality of hollow fiber membranes in a state where each of hollow interiors of the plurality of hollow fiber membranes is open on each of one end side and the other end side of the case,
wherein the case has, on both sides across the plurality of hollow fiber membranes, respectively,
   a first pipe connecting an inside and an outside of the case and serving as a passage for a fluid that flows through exteriors of the plurality of hollow fiber membranes, and
   a second pipe connecting the inside and the outside of the case and serving as a passage for a fluid that flows through the exteriors of the plurality of hollow fiber membranes,
wherein the hollow fiber membrane module further comprises a holding member provided in the case and configured to hold the plurality of hollow fiber membranes,
wherein the holding member includes:
   a pair of plate-shaped portions provided to sandwich the plurality of hollow fiber membranes and have a plurality of through holes that serve as passages for a fluid passing through the exteriors of the plurality of hollow fiber membranes, and
   a connection portion connecting the pair of plate-shaped portions, and
wherein a passage passing from the first pipe to a first plate-shaped portion, which is one of the pair of plate-shaped portions, is formed between the first plate-shaped portion and the case, and a passage passing from the second pipe to a second plate-shaped portion, which is the other of the pair of plate-shaped portions, is formed between the second plate-shaped portion and the case.

According to the present invention, the case is provided with the first pipe and the second pipe. There is thus no need to provide a gasket or the like as in a configuration in which a cover member is mounted on a case. In addition, since the passages are formed between the case and the pair of plate-shaped portions of the holding member provided in the case, a fluid is allowed to flow across the entire region in which the plurality of hollow fiber membranes are provided.

The plurality of hollow fiber membranes may be fixed to the holding member by the pair of sealing and fixing portions.

This prevents each of the pair of sealing and fixing portions from moving independently.

The first plate-shaped portion may be provided with a plurality of first support portions that abut on an inner circumferential surface of the case and maintain a gap between the first plate-shaped portion and the inner circumferential surface of the case, and
the second plate-shaped portion may be provided with a plurality of second support portions that abut on the inner circumferential surface of the case and maintain a gap between the second plate-shaped portion and the inner circumferential surface of the case.

This allows the gap between the first plate-shaped portion and the inner circumferential surface of the case and the gap between the second plate-shaped portion and the inner circumferential surface of the case to be maintained, and suppresses deformation of the first plate-shaped portion and the second plate-shaped portion.

An annular gap between the pair of sealing and fixing portions and the case may be sealed with an elastic seal portion.

### [Advantageous Effects of Invention]

As described above, according to the present invention, it is possible to reduce the manufacturing cost.

### [Brief Description of Drawings]

[Fig. 1]

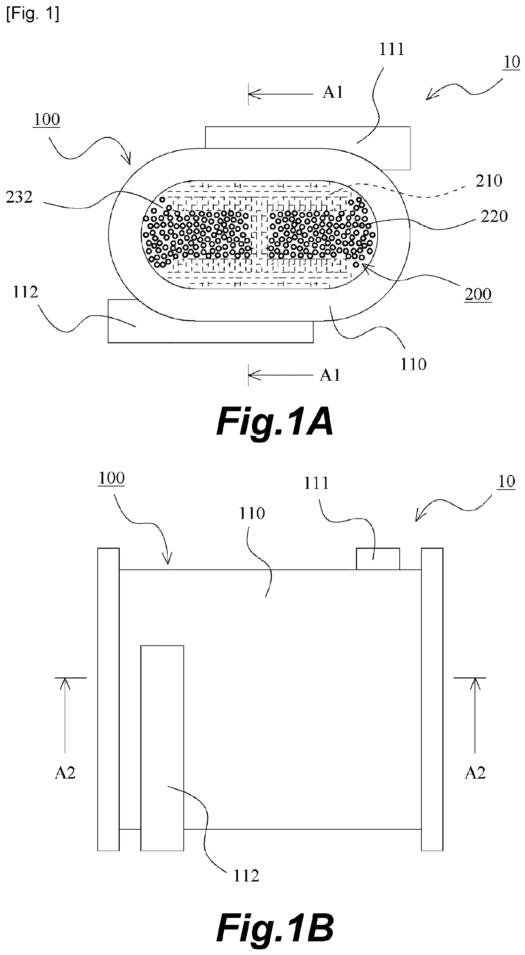

   Fig. 1 is a schematic view illustrating a configuration of a hollow fiber membrane module according to an embodiment of the present invention.
[Fig. 2]

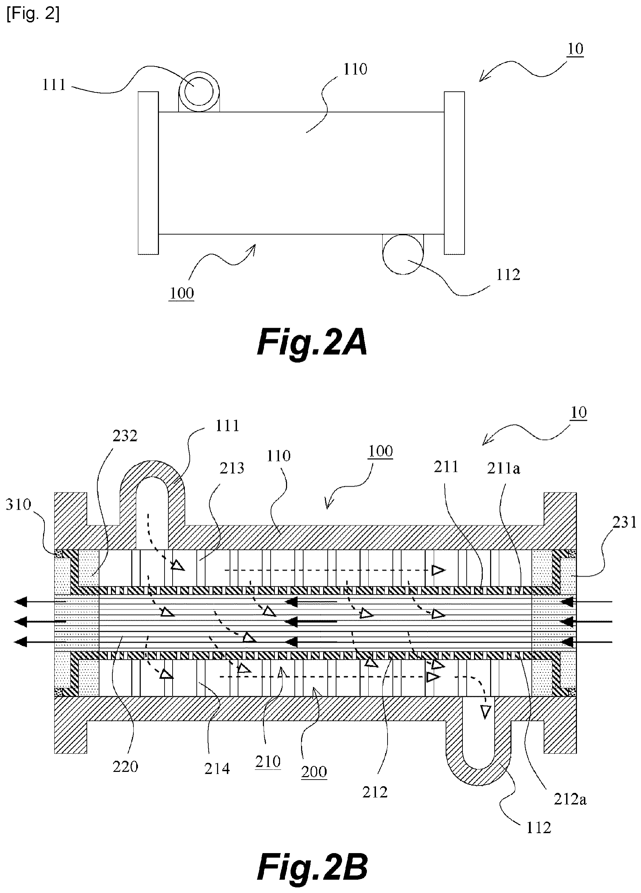

   Fig. 2 is a schematic view illustrating a configuration of the hollow fiber membrane module according to the embodiment of the present invention.
[Fig. 3]

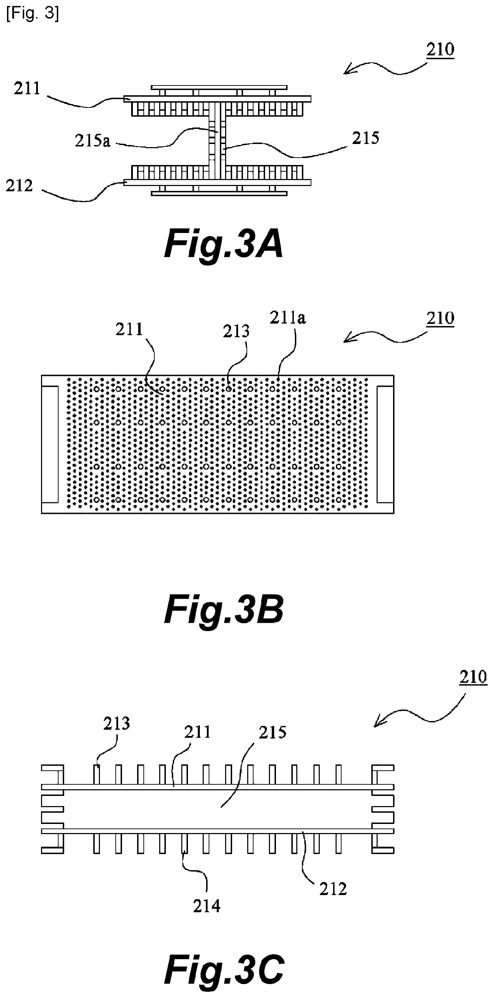

   Fig. 3 is a schematic view illustrating a configuration of a holding member according to the embodiment of the present invention.
[Fig. 4]

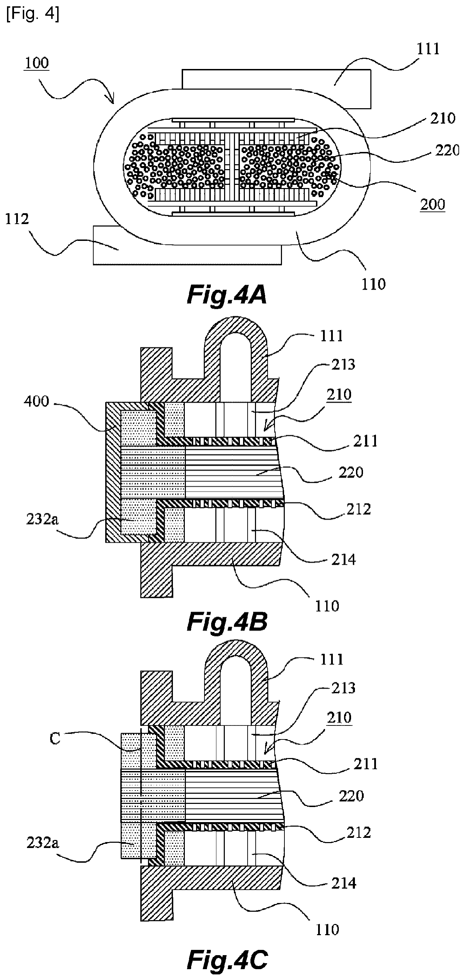

   Fig. 4 is a view illustrating manufacturing steps of the hollow fiber membrane module according to the embodiment of the present invention.
[Fig. 5]

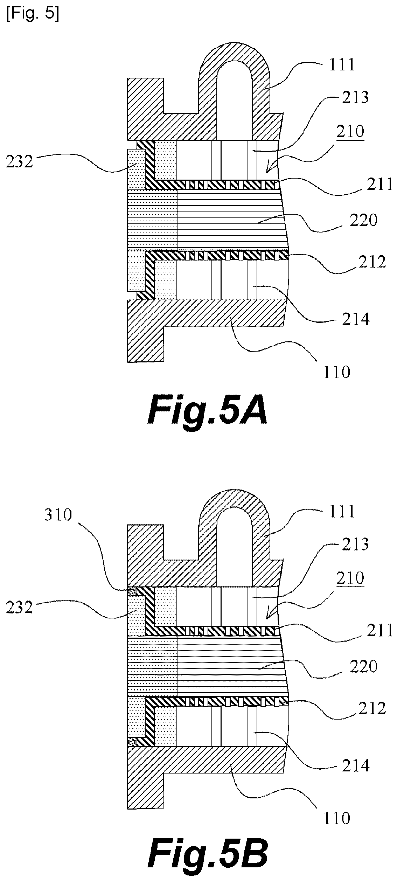

   Fig. 5 is a view illustrating manufacturing steps of the hollow fiber membrane module according to the embodiment of the present invention.
[Fig. 6]

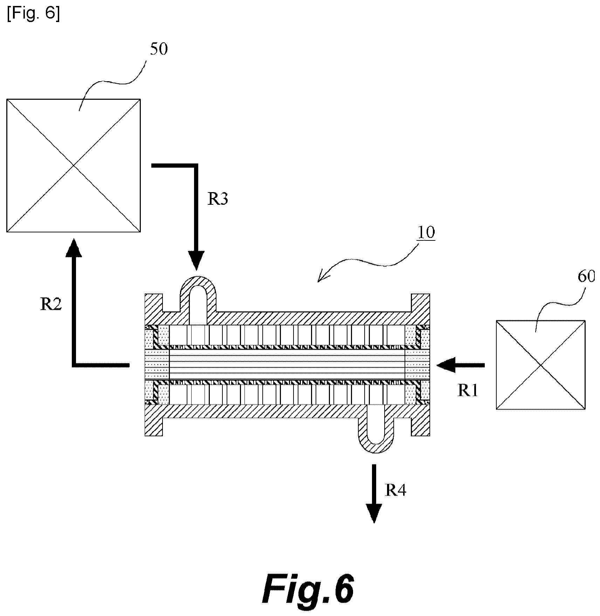

   Fig. 6 is a schematic view illustrating a configuration of an application example of the hollow fiber membrane module according to the embodiment of the present invention.
[Fig. 7]
   Fig. 7 is a schematic view illustrating a configuration of a hollow fiber membrane module according to the related art.

### [Description of Embodiments]

Hereinafter, an embodiment of this invention will be described in detail illustratively based on an example with reference to the drawings. However, the dimensions, materials, shapes, relative dispositions, and the like of components that are described in this embodiment are not intended to limit the scope of this invention only thereto unless particularly specifically described.

### (Embodiment)

A hollow fiber membrane module according to an embodiment of the present invention will be described with reference to Figs. 1 to 5. Fig. 1 is a schematic view illustrating a configuration of the hollow fiber membrane module according to the embodiment of the present invention. Fig. 1A is a front view of the hollow fiber membrane module, and Fig. 1B is a plan view of the hollow fiber membrane module. Fig. 2 is a schematic view illustrating a configuration of the hollow fiber membrane module according to the embodiment of the present invention. Fig. 2A is a side view of the hollow fiber membrane module, and Fig. 2B is a cross-sectional view along A1-A1 in Fig. 1A (a cross-sectional view along A2-A2 in Fig. 1B). Fig. 3 is a schematic view illustrating a configuration of a holding member according to the embodiment of the present invention. Fig. 3A is a front view of the holding member, Fig. 3B is a plan view of the holding member, and Fig. 3C is a side view of the holding member. Figs. 4 and 5 are views illustrating manufacturing steps of the hollow fiber membrane module according to the embodiment of the present invention. Fig. 4A is a front view of an intermediate product during manufacturing steps, and Figs. 4B and 4C and Fig. 5 are parts of cross-sectional views of the intermediate product during the manufacturing steps (corresponding to the cross-sectional view along A1-A1 in Fig. 1A (the cross-sectional view along A2-A2 in Fig. 1B)).

### <Hollow fiber membrane module>

A hollow fiber membrane module 10 according to the present embodiment includes a case 100 and a hollow fiber membrane unit 200 that is accommodated in the case 100. The case 100 includes a tubular case main body 110 and a pair of pipes provided in the case main body 110 (hereinafter, referred to as a first pipe 111 and a second pipe 112). The case 100 is a resin molded product obtained using a mold, and the case main body 110, the first pipe 111, and the second pipe 112 are integrally configured. The case main body 110 is open at both ends, and an inside thereof serves as an accommodation interior for accommodating a plurality of hollow fiber membranes 220. The case main body 110 according to the present embodiment has a pair of flat plate-shaped portions and a pair of curved portions that connect both sides of the flat plate-shaped portions, respectively. The case main body 110 has an oval shape when seen from the front.

The first pipe 111 and the second pipe 112 connect the outside of the case 100 to the inside of the case main body 110 and form a passage for a fluid that flows through the exteriors of the plurality of hollow fiber membranes 220. The first pipe 111 and the second pipe 112 are provided on the outer walls of the pair of flat plate-shaped portions in the case main body 110, respectively. The first pipe 111 and the second pipe 112 connecting the outside and inside of the case and forming the passage for a fluid that flows through the exteriors of the plurality of hollow fiber membranes 220 as described above are provided on both sides across the plurality of hollow fiber membranes 220, respectively.

The hollow fiber membrane unit 200 includes a holding member 210, the plurality of hollow fiber membranes 220 that are held in the holding member 210, and a pair of sealing and fixing portions 231 and 232. The pair of sealing and fixing portions 231 and 232 are configured to seal gaps among the plurality of hollow fiber membranes 220 in a state where each of hollow interiors of the plurality of hollow fiber membranes 220 is open on one end side and the other end side of the case 100. As the material of the hollow fiber membrane 220, polyphenylsulfone (PPSU) can be suitably used, and as the material of the sealing and fixing portions 231 and 232, an epoxy resin can be suitably used.

The holding member 210 can be made of a resin material. The holding member 210 includes a pair of plate-shaped portions that are provided to sandwich the plurality of hollow fiber membranes 220 (hereinafter, referred to as a first plate-shaped portion 211 and a second plate-shaped portion 212) and a connection portion 215 that connects the first plate-shaped portion 211 and the second plate-shaped portion 212. The first plate-shaped portion 211 and the second plate-shaped portion 212 are provided with a plurality of through holes 211a and 212a that serve as passages for a fluid passing through the exteriors of the plurality of hollow fiber membranes 220. The first plate-shaped portion 211 and the second plate-shaped portion 212 are configured to face the pair of flat plate-shaped portions in the case main body 110, respectively, when the holding member 210 is installed in the inside of the case (in the inside of the case main body 110). Thus, a passage passing from the first pipe 111 to the first plate-shaped portion 211 is formed between the first plate-shaped portion 211 and the case 100 (the case main body 110). Similarly, a passage passing from the second pipe 112 to the second plate-shaped portion 212 is formed between the second plate-shaped portion 212 and the case 100. These passages allow a fluid to flow in all over the plurality of hollow fiber membranes 220 that are accommodated between the pair of plate-shaped portion 211 and 212.

The first plate-shaped portion 211 is provided with a plurality of pin-shaped first support portions 213 that abut on the inner circumferential surface of the case 100 (the case main body 110) and maintain a gap between the first plate-shaped portion 211 and the inner circumferential surface of the case 100. Similarly, the second plate-shaped portion 212 is provided with a plurality of pin-shaped second support portions 214 that abut on the inner circumferential surface of the case 100 and maintain a gap between the second plate-shaped portion 212 and the inner circumferential surface of the case 100. This suppresses deformation of the first plate-shaped portion 211 and the second plate-shaped portion 212, and the gaps between the pair of flat plate-shaped portions of the case main body 110 and the pair of plate-shaped portions (the first plate-shaped portion 211 and the second plate-shaped portion 212) are stably secured.

### <Method for manufacturing hollow fiber membrane module>

A method for manufacturing the hollow fiber membrane module 10 will be described in the order of manufacturing steps. First, the holding member 210 is inserted into the accommodation interior of the case 100 (the case main body 110). In addition, the plurality of hollow fiber membranes 220 are loaded into each of both sides of the connection portion 215 between the first plate-shaped portion 211 and the second plate-shaped portion 212. Fig. 4A shows a state where the plurality of hollow fiber membranes 220 have been loaded. Next, the sealing and fixing portions 231 and 232 are formed. Figs. 4 and 5 show a process for forming the sealing and fixing portion 232, which is also applicable to the sealing and fixing portion 231.

First, a jig 400 for loading a liquid-form potting material, such as an epoxy resin, is mounted at an end of the case main body 110. A liquid-form potting material 232a is loaded in this state (refer to Fig. 4B). The liquid-form potting material 232a may be injected from an injection port provided in the jig 400 or may be injected via a tube or the like that is passed through the first pipe 111. In addition, liquid level of the potting material 232a can be maintained at a predetermined position by causing a centrifugal force or the like to act thereon while the liquid-form potting material 232a is injected and the potting material 232a cures.

After the potting material 232a cures, the jig 400 is removed (refer to Fig. 4C). In addition, a part of the cured potting material 232a is cut together with a part of the leading ends of the plurality of hollow fiber membranes 220. A dash-dot line C in Fig. 4C indicates the cut plane. As a result, the sealing and fixing portion 232 is formed such that each of the hollow interiors of the plurality of hollow fiber membranes 220 is open and the gaps among the plurality of hollow fiber membranes 220 are sealed (refer to Fig. 5A). In the present embodiment, the holding member 210 is configured to have complicated structures at both end portions. This makes the sealing and fixing portion 232 caught in the end portion of the holding member 210 even when a force acts on the cured sealing and fixing portion 232 in a variety of directions. For example, as shown in Fig. 5A, a part of the sealing and fixing portion 232 is present on each of the end surface side and the interior side of the case 100 with respect to portions of the end of the holding member 210 that extend in the vertical direction in the drawing. Therefore, the sealing and fixing portion 232 is not displaced in the horizontal direction in the drawing with respect to the holding member 210. Therefore, the sealing and fixing portion 232 does not come off from the holding member 210.

After the sealing and fixing portion 232 is formed, an adhesive portion between the case main body 110 and the sealing and fixing portion 232 is peeled off. The adhesive portion between the case main body 110 and the sealing and fixing portion 232 can be peeled off by, for example, putting the intermediate product in which the sealing and fixing portion 232 has been provided into a constant temperature bath and heating the intermediate product for a predetermined time. After that, a liquid-form gasket 310, such as a silicon adhesive, is injected into an annular gap between the case main body 110 and the sealing and fixing portion 232 (refer to Fig. 5B). The annular gap between the case main body 110 and the sealing and fixing portion 232 is sealed by curing of the liquid-form gasket 310. That is, the annular gap between the sealing and fixing portion 232 and the case 100 (the case main body 110) is sealed with the cured liquid-form gasket 310 (an elastic seal portion).

Here, the reason for sealing the annular gap between the case main body 110 and the sealing and fixing portion 232 with the liquid-form gasket 310 after the adhesive portion therebetween is peeled off will be briefly described. Since the case main body 110 and the sealing and fixing portion 232 have different linear expansion coefficients, a force that tears off the case main body 110 and the sealing and fixing portion 232 is generated depending on the ambient temperature. Therefore, there is a concern that the adhesive portion between the case main body 110 and the sealing and fixing portion 232 may peel off over time. Particularly, if the hollow fiber membrane module 10 is large, the difference in linear expansion coefficient is not negligible. Therefore, in the present embodiment, the adhesive portion between the case main body 110 and the sealing and fixing portion 232 is torn off and the annular gap therebetween is sealed with the liquid-form gasket 310 that is elastically deformable even after curing.

### <Application example of hollow fiber membrane module>

An application example of the hollow fiber membrane module 10 according to the present embodiment will be described. The hollow fiber membrane module 10 according to the present embodiment can be applied as a humidifier or a dehumidifier. This will be briefly described.

The hollow fiber membrane module 10 includes a membrane interior passage that passes through the interiors of the plurality of hollow fiber membranes 220 and a membrane exterior passage that passes through the exteriors of the plurality of hollow fiber membranes 220. For example, the membrane interior passage is configured such that a dry gas flows from one end side of the case 100 to the other end side of the case 100 through the hollow interiors of the plurality of hollow fiber membranes 220 (refer to solid arrows in Fig. 2B). In addition, for example, the membrane exterior passage is configured such that a wet gas having a higher humidity than the dry gas flows from the first pipe 111 to the second pipe 112 through the accommodation interior of the case 100 (refer to dotted arrows in Fig. 2B).

Note that, while not shown, lids including an inlet and an outlet for letting a fluid flow into the membrane interior passage may be mounted at both ends of the case 100. The movement of the hollow fiber membrane unit 200 with respect to the case 100 can be more reliably prevented by the lids.

The above-described configurations allow moisture in the wet gas to move into the dry gas by a membrane separation action of the hollow fiber membranes. That is, the dry gas is humidified and the wet gas is dehumidified. Thus, the hollow fiber membrane module can be used as a humidifier and as a dehumidifier.

The hollow fiber membrane module 10 according to the present embodiment can be suitably used as a humidifier for humidifying an electrolyte membrane provided in a fuel cell 50. A configuration where the hollow fiber membrane module 10 is used as such a humidifier will be described with reference to Fig. 6. As shown in the drawing, a dry air is supplied to the membrane interior passage of the hollow fiber membrane module 10 by a compressor 60 (refer to an arrow R1). The dry air that flows in the membrane interior passage is humidified as described above and discharged from the hollow fiber membrane module 10. This humidified wet air is supplied to the fuel cell 50 (refer to an arrow R2). Therefore, the electrolyte membrane provided in the fuel cell 50 is maintained in a wet state. In addition, a wet air generated in the fuel cell 50 is supplied to the membrane exterior passage of the hollow fiber membrane module 10 (refer to an arrow R3) and dehumidified by a membrane separation action of the hollow fiber membranes, and a dry gas is discharged from the hollow fiber membrane module 10 (refer to an arrow R4). The temperature of the wet air generated in the fuel cell 50 is high and the temperature of the dry air supplied from the compressor 60 is low, thus the temperature of the wet air discharged from the hollow fiber membrane module 10 becomes low. Therefore, the hollow fiber membrane module 10 exhibits a heat exchange function.

### <Advantages of hollow fiber membrane module according to the present embodiment>

According to the hollow fiber membrane module 10 according to the present embodiment, the case 100 is provided with the first pipe 111 and the second pipe 112. There is thus no need to provide a gasket or the like as in a configuration in which a cover member is mounted on a case. Therefore, bolts or the like for fixing the gasket and the case to a cover member is not necessary, and thus the number of parts can be decreased. Further, a process for enhancing the flatness of a portion with which a gasket is close contact in a molded product is not necessary, and thus the manufacturing cost can be reduced.

Since the passages are formed between the case 100 and the pair of plate-shaped portions (the first plate-shaped portion 211 and the second plate-shaped portion 212) of the holding member 210 provided in the case 100, a fluid is allowed to flow across the entire region in which the plurality of hollow fiber membranes 220 are provided. Therefore, it is also possible to enhance the humidification efficiency or the dehumidification efficiency.

In addition, in the present embodiment, the plurality of hollow fiber membranes 220 are fixed to the holding member 210 by the pair of sealing and fixing portions 231 and 232. This prevents each of the pair of sealing and fixing portions 231 and 232 from moving independently. Therefore, the hollow fiber membranes 220 are prevented from being pulled or crashed, which makes it possible to reduce a load on the hollow fiber membranes 220.

### (Others)

The holding member 210 may be provided with a cavity portion 215a in the connection portion 215 to connect a passage between the first plate-shaped portion 211 and the case main body 110 to a passage between the second plate-shaped portion 212 and the case main body 110. In this configuration, a passage is formed that directly reaches the second pipe 112 from the first pipe 111 without passing through a region where the plurality of hollow fiber membranes 220 are loaded. This can suppress a pressure loss in a flow of a wet gas from the first pipe 111 to the second pipe 112, for example, and thus suppress the load on the hollow fiber membranes 220. Note that the cavity portion 215a may not be provided depending on a usage condition. In the above-described embodiment, the hollow fiber membrane module 10 is used as a humidifier or a dehumidifier. However, the hollow fiber membrane module of the present invention can also be applied to other uses, such as a filtration device (for example, a device that performs cross flow filtration).

### [Reference Signs List]

- 10: Hollow fiber membrane module
- 100: Case
- 110: Case main body
- 111: First pipe
- 112: Second pipe
- 200: Hollow fiber membrane unit
- 210: Holding member
- 211: First plate-shaped portion
- 212: Second plate-shaped portion
- 211a, 212a: Through hole
- 213: First support portion
- 214: Second support portion
- 215: Connection portion
- 215a: Cavity portion
- 220: Hollow fiber membrane
- 231, 232: Sealing and fixing portion
- 232a: Potting material
- 310: Liquid-form gasket
- 400: Jig

## Claims

1. A hollow fiber membrane module comprising:
a plurality of hollow fiber membranes;
a case, in an accommodation interior of which the plurality of hollow fiber membranes are accommodated, the accommodation interior being open at both ends; and
a pair of sealing and fixing portions that seal gaps among the plurality of hollow fiber membranes in a state where each of hollow interiors of the plurality of hollow fiber membranes is open on each of one end side and the other end side of the case,
wherein the case has, on both sides across the plurality of hollow fiber membranes, respectively,
a first pipe connecting an inside and an outside of the case and serving as a passage for a fluid that flows through exteriors of the plurality of hollow fiber membranes, and
a second pipe connecting the inside and the outside of the case and serving as a passage for a fluid that flows through the exteriors of the plurality of hollow fiber membranes,
wherein the hollow fiber membrane module further comprises a holding member provided in the case and configured to hold the plurality of hollow fiber membranes,
wherein the holding member includes:
a pair of plate-shaped portions provided to sandwich the plurality of hollow fiber membranes and have a plurality of through holes that serve as passages for a fluid passing through the exteriors of the plurality of hollow fiber membranes, and
a connection portion connecting the pair of plate-shaped portions, and
wherein a passage passing from the first pipe to a first plate-shaped portion, which is one of the pair of plate-shaped portions, is formed between the first plate-shaped portion and the case, and a passage passing from the second pipe to a second plate-shaped portion, which is the other of the pair of plate-shaped portions, is formed between the second plate-shaped portion and the case.

2. The hollow fiber membrane module according to claim 1, wherein the plurality of hollow fiber membranes are fixed to the holding member by the pair of sealing and fixing portions.

3. The hollow fiber membrane module according to claim 1 or 2,
wherein the first plate-shaped portion is provided with a plurality of first support portions that abut on an inner circumferential surface of the case and maintain a gap between the first plate-shaped portion and the inner circumferential surface of the case, and
wherein the second plate-shaped portion is provided with a plurality of second support portions that abut on the inner circumferential surface of the case and maintain a gap between the second plate-shaped portion and the inner circumferential surface of the case.

4. The hollow fiber membrane module according to claim 1 or 2, wherein an annular gap between the pair of sealing and fixing portions and the case is sealed with an elastic seal portion.
